# EUROPEAN PATENT APPLICATION

(11) **EP 2 666 812 A1**
(43) Date of publication of application: **27.11.2013**
(21) Application number: 12075098.9
(22) Date of filing: 28.08.2012
(51) Int. Cl.: C08J 11/10

(54) **Method and apparatus for recycling of organic waste preferably used tires using microwave technique**

(30) Priority: 21.05.2012 PL 39925012
(71) Applicant: Z.M. Marpo sp.j. M. Przygodski I Wspólnicy, 70-675 Szczecin (PL)
(72) Inventor: Przygodzki, Marek, 70-731 Szczecin (PL); Michalowicz, Dariusz, 71-642 Szczecin (PL); Salski, Bartosz, 02-777 Warszawa (PL)

(57) **Abstract**

Method and apparatus for recycling of organic waste, preferably used tyres, using microwave technique, according to the invention, consisting in coarsely pre-shredded material layered on a belt conveyor being subjected to a depolymerisation process conducted with an adjustable speed, in an air-free hydrocarbon atmosphere, with light negative pressure, during its passage through the microwave tunnel (pic.1) with uniformly distributed electromagnetic field of variable power inside, generated by multiple microwave sources (pic.5) of frequency of 2.45 [GHz] or 5.8 [GHz]. Pre-shredded material is fed into the microwave tunnel (i.e. reactor) through the special hydraulic - screw feeder setup, which prevents the air from getting into the reactor and, at the same time, rinses the raw material and damps it, pushes the air out as well as fluently and continuously feeds it to the distributing roller (pic.3) which distributes it evenly on the conveyor belt. Solid products from the process are received through a two-step screw conveyor system (pic.4) which enforces the products to cool down and also prevents the air from getting into the reactor. The negative pressure is sustained by means of a fan located in a vapour sucking setup.

## Description

### AREA OF APPLICATION

The subject of this invention is a method (technology) and apparatus for recycling of waste organic material, such as waste car and lorry tyres, or plastic elements, back to basic substances like carbon mineral fillers, oils, scrap metal and generator gas.

### AREA OF APPLICATION - CURRENT SITUATION

Problem with finding an efficient method for recycling of organic waste into reusable raw materials still needs a good solution. So far, even when the organic waste is utilised it is through incineration which creates toxic gases and loss of potential source rich in raw materials. Only a small percentage is being recycled with much of it being stocked in hazardous and inconvenient landfills. This situation is caused by a low economic efficiency and capacity as well as high energy consumption of known technologies and equipment. Moreover, these technologies have usually high impact on the environment which additionally limits their application.

### PRIOR ART

Most popular and widely used methods for recycling of organic waste, in particular waste tyres, consist in the fact of mechanical processing the waste into different granulates and meals which consumes great amounts of energy and utilises very expensive equipment. Additionally, the products of such processes are cheap and have very limited area of application.

Alternative would be pyrolysis, i.e. thermal depolymerisation of organic compounds. The thermal depolymerisation process can be conducted with a limited air access, i.e. in conditions of partial combustion or by heating in an air-free atmosphere. One needs to heat the whole volume of material to high temperature (in case of rubber it is approx. 380 [°C]). When the process is conducted with a limited air access then a large part of the material is combusted which equals to a loss of raw product. When the process is conducted in equipment with indirect, both gas or electric heating, then it takes very long to achieve the target temperature in all pieces of the material. This is due to, inter alia, the low thermal conductivity of materials like rubber. In such process there are huge temperature differences (i.e. process conditions) between the surface and core of the material. This results in high energy consumption and low efficiency of such technology, as well as high environmental nuisance. Lack of adjustment of temperature and speed of the process also causes the end products to be of poor and nonuniform quality which renders them hardly usable.

Utilisation of the microwave technology allows for limiting the power consumption and speeding up the depolymerisation process. Huge gain in speed is possible due to the fact, that when the thermal energy has to work from the surface inwards the microwave energy works immediately in the whole volume of the material. Furthermore, the microwave depolymerisation can be conducted in relatively low temperatures.

Possibility of application of the microwave technology for waste utilisation and sterilisation is well known but, so far, there have been no equipment efficient, simple, reliable, universal, environmentally friendly and cheap to run enough to start the wide application of microwaves in organic waste recycling. Existing microwave tunnel reactors, with belt conveying systems, are generally used as industrial dryers with an air circulation inside. In order to use them for depolymerisation process, one needs to completely seal them to prevent the air access. So far this has been successfully achieved in a non-continuous equipment, i.e. of a batch type, which significantly limits the process efficiency. There have been trials, described below, to achieve the oxygen-free atmosphere in microwave tunnels prepared for a continuous operation. In these trials, however, oxygen elimination was based on its recurrent displacement by an inert gas (mostly nitrogen). Waste material is also fed through a set of special locks filled with the same gas, to purge any oxygen left between the material pieces. That is a complicated and expensive process with limited efficiency: the efficiency is high only in case of single, large elements like whole tyres. Almost every element like that is different in size and weight which enforces to individually correct the process parameters every single time. This makes the build cost high and universality low. Additionally, microwave depolymerisation of big elements is easy and fast only when utilising microwave sources of low frequency (915 [MHz]) which penetrate deeply into the material. Such sources cannot be used in industrial equipment in Europe, due to imposed safety limitations similar to those concerning the cellular telephony. Such sources have also half the energetic efficiency of those of a 2.45 [GHz] frequency and five times lower than those of a 5.8 [GHz] frequency. It is also important, that as a result of the microwave depolymerisation the polymer chains are divided at the particle level with gas being the main product. Economic efficiency suggests, however, limiting the gas fraction and increasing the yield ratio for solid (char/carbon) and oil fractions. All of these mean that one should aim for a mixed type of process, the thermal-microwave depolymerisation. That is why it is essential to build more universal equipment, where it would be possible to set up the optimal parameters, temperature and speed for chosen type of process and waste material being recycled.

In Poland, there is an array of claimed inventions in this area of application. For example, a patent application no. PL 104483 describes a tunnel pyrolysis furnace with carts transporting waste tyres along its length with internal circulation of fumes providing the process heat.

Patent application no. P.388394 describes a continuous recycling process of car tyres, **characterised in that** whole tyres are fed through a hydraulic lock to a sealed apparatus heated both indirectly and through a plate heat exchangers and then moved to a cooling and grinding section.

Patent application no US 7361303, belonging to the Canadian EWS company, describes a medical waste microwave utilisation unit, divided into three sections separated from each other by specially sealed gates. This unit is **characterised in that** the air-free atmosphere, essential for processing the waste material, is achieved in the first section by purging the air from the weighed material with an inert gas. EWS' equipment is suitable for car tyres as well but fed only as complete elements, without pre-shredding.

Patent application US 7927465 (EP 1311791), belonging to an American EnviroWave Corporation, describes a method and apparatus for microwave utilisation of organic waste (drying and sterilisation process of materials containing water) conveyed on a belt conveyor in an air flow in temperature of 75 [°C] and 125 [°C], in an electromagnetic field generated by two sources of frequency of 915 [MHz] that, thanks to a geometric setup, generate microwaves that are shifted in phase by 90°.

Additionally, the following methods and/or apparatuses of depolymerisation (pyrolysis) of different waste materials are known:
1. Patent application no. EP 10814234 - Kostek, Stanis 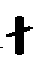 law Sr.
2. Patent application no. EP 07863979 - Kostek, Stanis 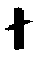 aw Sr.
3. Reaktor und vorrichtung zur pyrolyse von abfall, insbesondere reifen
4. EP07804516, - "VPV-TEAM" Ingatlanforgalmi Kft. VERFAHREN ZUM FORMEN VON KUNSTSTOFFABFÄLLEN UND VERFAHREN ZUM PYROLYSIEREN VON KUNSTSTOFFABFÄLLEN
5. Patent application no. EP 06832919 - Nippon Steel Corporation KONTINUIERLICHES PYROLYSEVERFAHREN FÜR KAUTSCHUK- ODER KU NSTSTOFFABFALL
6. Patent application no. EP 06752931-Niu, Bin VORRICHTUNG ZUR PYROLYSE VON KAUTSCHUKSCHNITZELN UND TRENNUNG DER GEWONNENEN PRODUKTE
7. Patent application no. EP 04798750 - New Energy Kft. Verfahren und Anlage fürs Pyrolysieren von Kunststoffen und pyrolysiertes Produkt
8. Patent application no. EP 01104728 -Tokyo Ertec Co., Ltd., Japanese Company PROCESSES FOR PYROLYZING TIRE SHREDS AND TIRE PYROLYSIS SYSTEMS
9. Patent application no. EP 00984380 - Tirenergy Corporation Verfahren zur Pyrolyse von Siliconkautschukvulkanisaten
10. Patent application no. EP 92113437 - WACKER-CHEMIE GMBH Vorrichtung zur Pyrolyse zerkleinerter Reifen
11. Patent application no. EP 81304022 - Brewer, John C. Verfahren und Apparat zur Pyrolyse
12. Patent application no. EP 80106537 - Ishizaka, Seiichi President of AGENCY OF INDUSTRIAL SCIENCE and TECHNOLOGY Vorrichtung und Verfahren zur Pyrolyse von Abfallstoffen
13. Patent application no. EP 80102595 - HERKO Pyrolyse GmbH & Co. Recycling KG APPARATUS AND PROCESS FOR PYROLYSIS OF SCRAP TYRES AND THE LIKE
14. Patent application no. EP 07817296 - Global Power And Energy Company Limited VERFAHREN ZUR BEHANDLUNG VON REIFEN UND PYROLYSEREAKTOR DAFÜR
15. Patent application no. EP 08737815 - Energy & Environment Consulting, S. L. APPARATUS FOR PYROLYSIS OF SHREDDED TYRES
16. Patent application no. EP 03772430 - Lekrinszki, István VERFAHREN UND EINRICHTUNG ZUR VORBEHANDLUNG VON GEBRAUCHTEN REIFEN VOR EINEM PYROLYSEPROZESS
17. Patent application no. EP 02783131- BCDE Group Waste Management Ltd Oy VERFAHREN ZUR WIEDERGEWINNUNG VON KOHLENSTOFF UND KOMINATIONEN VON KOHLENWASSERSTOFFEN AUS POLYMEREN, VORZUGSWEISE IN FORM VON ALTREIFEN, DURCH PYROLYSE IN EINEM PYROLYSEREAKTOR
18. Patent application no. EP 99943601 - Ershag, Bengt-Sture APPARATUS FOR RECYCLING OF OLD RUBBER TYRES AND OTHER PRODUCTS OF POLYMER MATERIALS THROUGH OXYGEN-FREE PYROLYSIS IN A CONNECTED CONTINUOUSLY OPERATING SYSTEM
19. Patent application no. EP 98939845 - Nylander, Per-Ivar

None of the above mentioned inventions, however, solves the issue of the waste car and lorry tyres recycling in a way this invention does, as described below.

### GENERAL DESCRIPTION OF THE INVENTION

The essence of the recycling of the organic waste, preferably used tyres, conducted in an apparatus according to this invention, is that it is done by the means of a depolymerisation process conducted in a microwave tunnel, in a continuous manner, in a very stable conditions, in a hydrocarbon and air-free atmosphere, in a negative pressure lower than the atmospheric pressure by 0.03-0.07 [at]. It is also important that the recycled material is pre-shredded, purged of air and distributed in an even, thin layer of an adjustable thickness and conveyed through a microwave tunnel at an adjustable speed while being exposed to an evenly distributed electromagnetic field generated by a special setup of multiple polarised microwave sources (magnetrons) of the frequency of 2.45 [GHz] or 5.8 [GHz]. The power of the electromagnetic field can be appropriately corrected through a cyclical switching off of some of the sources or co-application of sources of different, higher and lower, unit power.

Method, according to the invention, allows conducting a process of intensive pure microwave depolymerisation as well as a mixed one: thermal-microwave, in an array of similar equipment constructed according to the same universal idea. It also allows to process different kind of waste material in a continuous, fluent manner with high efficiency and to obtain products of high and stable quality.

The method, according to this invention, does not request to weigh every portion of the material fed into the apparatus like other, competing solutions do. The stable process conditions are maintained thanks to the fact that the waste material of a given kind is conveyed through the tunnel distributed in one layer, which thickness is matched empirically, with a stable, appropriately matched speed.

It is also important for this method that the waste material is only pre-shredded to a given fragmentation that allows to freely convey the material through a screw conveyor and to distribute it on a belt conveyor in a thin layer. This is crucial when energy consumption of the complete process is concerned, including the waste material preparation cost.

The essence of the apparatus for organic waste recycling by the means of the microwave technology, according to this invention hereinafter called the "microwave reactor", is as follows:
a) it consists of single completely sealed chamber inside of which there is a microwave tunnel, as well as a mesh belt conveyor transporting the evenly distributed pre-shredded waste material in a continuous manner, with an adjustable speed, through the full length of the tunnel, from a distributing roller to a carbon product outlet hopper;
b) it is equipped with a continuous screw feeder system feeding the pre-shredded waste material through the hydraulic setup, purifying the material and preventing the air from getting into the microwave reactor;
c) its feeding system is equipped with a setup for pushing the residual oil, water or other liquid from the waste material being fed;
d) high process efficiency is provided by a special setup and tuning of multiple microwave sources of frequency of 2.45 [GHz] or 5.8 [GHz];
e) it is equipped with a two step carbon product receiving and grinding system, also protecting the inside of the reactor from air access;
f) it is equipped with a fan system for sucking off the process gases and providing a light negative pressure in the microwave tunnel at the level of 0.03-0.07 [at];
g) all the joints of movable parts with sealed chamber's walls are protected by special locks filled with an inert gas in order to make these joints air-tight;
h) it is equipped with special microwave filters (dampers) at given spots in the gas suction ducts.

### DETAILED DESCRIPTION OF THE INVENTION

Method and apparatus for organic waste recycling that is the subject of this invention are depicted, as an exemplary execution, on attached diagrammatic images. For the purpose of this description, pre-shredded waste material is hereinafter called simply a "material".

Pic.1 depicts a side view of the microwave reactor, pic.2 depicts the continuous screw feeding system in a basic version, pic.2A depicts alternative version of the continuous screw feeding system, pic.3 depicts the material distributing roller, pic.4 depicts the carbon product collecting system, pic.5 depicts the microwave sources (magnetrons) setup, pic.6 depicts the microwave filter (damper) in a gas suction duct and pic.7 depicts the movable joint inert lock.

The microwave reactor is equipped with the continuous screw feeding system (1) which feeds the material to the hopper above the distributing roller (2) which next distributes the material evenly on the surface of the steel mesh belt conveyor (3). Drives, for both the distributing roller (4) and the mesh belt conveyor, are mounted outside of the reactor's chamber. The mesh belt conveyor transports the pre-shredded material distributed on its surface through the full length of the microwave tunnel (5). During their passage through the tunnel, the material pieces get heated and depolymerised due to the influence of the electromagnetic field generated by magnetrons setup (6) located on the upper wall of the tunnel. A gas that is produced during the depolymerisation process is sucked through the suction ducts (7), by a fan which conveys it through a setup of well-known oil condensing and gas purifying units (like wet scrubbers etc.). As a result of the depolymerisation of the material transported through the microwave tunnel its place on the mesh belt conveyor (3) take solid products of the process, mainly char/carbon, and in case of processing car tyres, also scrap metal. These products of the process are pushed to the outlet located at the back end of the tunnel (8) right to the hopper of the carbon product collecting system.

The continuous screw feeding system, as per presented example in the pic.2, consists of the loading hopper (1) filled with oil, water or other liquid matched to a type of processed material. The material dosed to the feeding hopper slides down its front, inclined wall (chute) into the bottom screw feeder (2) which conveys it to the microwave reactor. The feeding section of the hopper is separated from the gas part by an upper lock (1.1) submerged in the liquid but maintaining a clear above the chute. Thanks to that the feeding hopper plays a role of a siphon, preventing the air from accessing the microwave reactor. Additionally, the oil bath causes the complete purge of the material from the air and possible mineral residue. Thorough purging is aided by a mixer (1.2) installed in the feeding hopper. Oil surge system (4) allows maintaining its constant level in the feeding section of the hopper regardless of its level change in the gas section caused by either negative pressure in the microwave reactor or quantity of the material fed; this system prevents the siphon from unsealing. The screw feeder (2) extracts the material from the oil and conveys it upwards through the section where the residual oil is pushed away from the material: material is pushed by a progressive screw through an area reducer with machined holes allowing the oil to drip. In the upper part of the screw feeder there is an outlet directly into the hopper of the distributing roller (6). Commonly known belt or screw conveyor system is used to dose the material into the feeding hopper, automatically, to a given level according to readouts from a sensor (7).

As an alternative solution, the feeding system, according to this invention, may be of a hydraulic-extruder type (pic.2A). In this version there is no siphon. The pre-shredded material is fed into the feeding hopper filled with oil, water or other fluid (1) where it is mixed by the mixer (1.2). The bottom screw feeder (2) extracts the material directly from the hopper. This screw feeder has a progressive screw and its outlet end is not fixed (i.e. loose). It first conveys the material through a mesh area reducer (5), where the residual oil is pushed away, and then through an extruding choke (8).

The material distributing roller (pic.3) consists of the hopper (1), located at an adjustable height above the mesh belt conveyor (5), which is being constantly filled with material by the continuous feeding screw system. In this hopper there is a mechanically driven bi-directional screw that distributes the material evenly to both sides. This screw has vanes (paddles) along its edge to push the material (3). Plying plate (4) makes sure that the mesh belt conveyor extracts a material layer of constant thickness from underneath the hopper.

The carbon product collecting system consists of the receiving hopper (1) where the solid process products are pushed from the mesh belt conveyor after the depolymerisation process. The lateral extracting screw feeder conveys the products from the hopper into the cooling screw feeder (2) equipped with a water jacket. During passage through this screw feeder, the products are cooled down to the ambient temperature. In a next step the products are fed into the extracting screw feeder (3) which has a loose outlet end (i.e. not fixed) and which pushes the material through a narrow extruding choke (4). Because the products completely fill the choke at the same time they block the air from getting into the screw feeders and into the microwave reactor. For this idea to work, this screw feeder has to be filled with products; should there be no product inside it, like during the process start-up, there is a special slide gate on its outlet to seal it (5).

An example of the magnetrons setup (microwave sources) and their respective waveguides is presented on pic.5. for the frequency of 2.45 [GHz] and this particular width of the microwave reactor. In this instance, every section (1) of the microwave reactor has 12 magnetrons (2) located on its upper wall in a setup as shown by the waveguides mounting holes (7). The height of the tunnel, i.e. the distance between its upper wall and mesh belt conveyor surface (6) is matched to a given wavelength. The microwave reactor, according to this invention, can have multiple sections like this one which allows for the greater passage speed of the mesh belt conveyor and thus higher capacity of the microwave reactor. In the apparatus, according to this invention, one can use multiple different arrangements of the magnetrons in each section of the microwave reactor. The electromagnetic field in the microwave reactor is generated, according to this invention, by a setup of multiple linearly polarised microwave sources of frequency of 2.45 [GHz] or 5.8 [GHz] distributed at distance appropriate for a given wavelength, where each consecutive source is rotated by 90° horizontally and slightly dephased thanks to a carefully matched impedance of consecutive waveguides. The above rule ensures the maximum power efficiency of the apparatus and stable process conditions for every processed batch of material. The magnetrons are fixed to the upper wall of the microwave reactor through typical waveguides (3) and antennae (4). Each antenna is separated from the process area of the microwave reactor by commonly available ceramic plates of high microwave conductivity.

The microwave filter (damper) located in the gas suction duct is showed in pic.6. It is **characterised in that**, for microwaves of frequency 2.45 [GHz], the interior of the duct at a given spot is filled with pipes less or equal to 20 [mm] in diameter and more than 100 [mm] in length. These dimensions would be respectively smaller for the microwave frequency of 5.8 [GHz].

The inert lock showed in pic.7 seals the joints of movable shaft (1) with microwave reactor's wall. The basic sealing is done by a traditional mechanical solution (2). Although, only after putting a lock around this sealing, filled with an inert gas flowing from an inlet (3) to an outlet (4) with a light overpressure, such seal protects the inside of the microwave reactor from the outside air.

Apparatus for the organic waste recycling by the means of the microwave technology, as according to this invention, is compatible with commonly known, typical external equipment:
- automatic belt or screw conveyor system used to dose the material into the feeding hopper;
- oil condensing and gas cooling system;
- gas purification and non-condensable gas storage system;
- separation system for solid products of the process and packing system for the char/carbon product.

Complete air-tight sealing is an important feature of the apparatus which is a subject of this invention, as well as of the whole recycling installation which incorporates this apparatus. Such installation would not emit any fumes or dust. Only after applying an electric generator, to burn the non-condensable process gas in order to generate electric power, there would be normal fumes (like from many similar combustion motors), which - after proper purification - can be emitted.

The important factor to make such installation work-safe and environmentally friendly is to use a commonly known inerting system, i.e. to flush the process area of the equipment with an inert gas during the start-up and switch off procedures.

Critical point in keeping a full work safety and the sealing of the installation would be to eliminate the risk of a human error and/or operator's mishandling. This can be achieved by a full automatisation of the whole process, including its all control and measurement aspects.

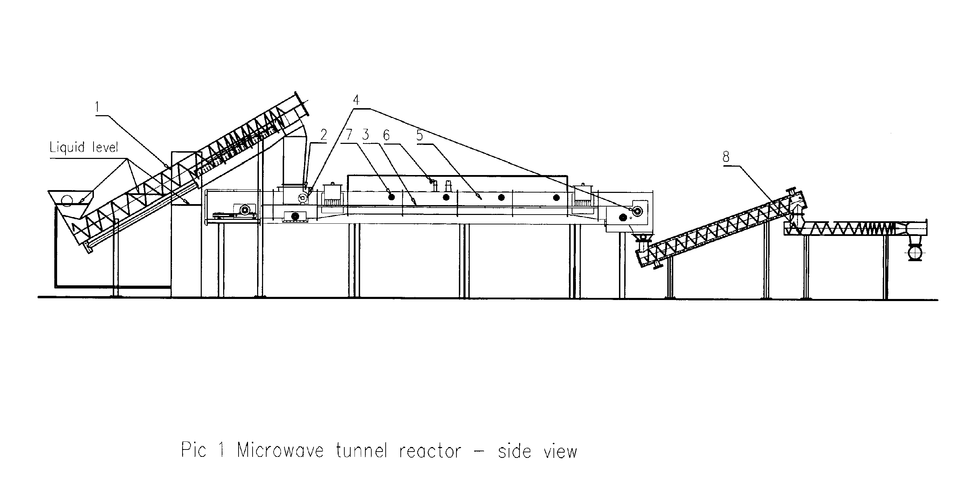

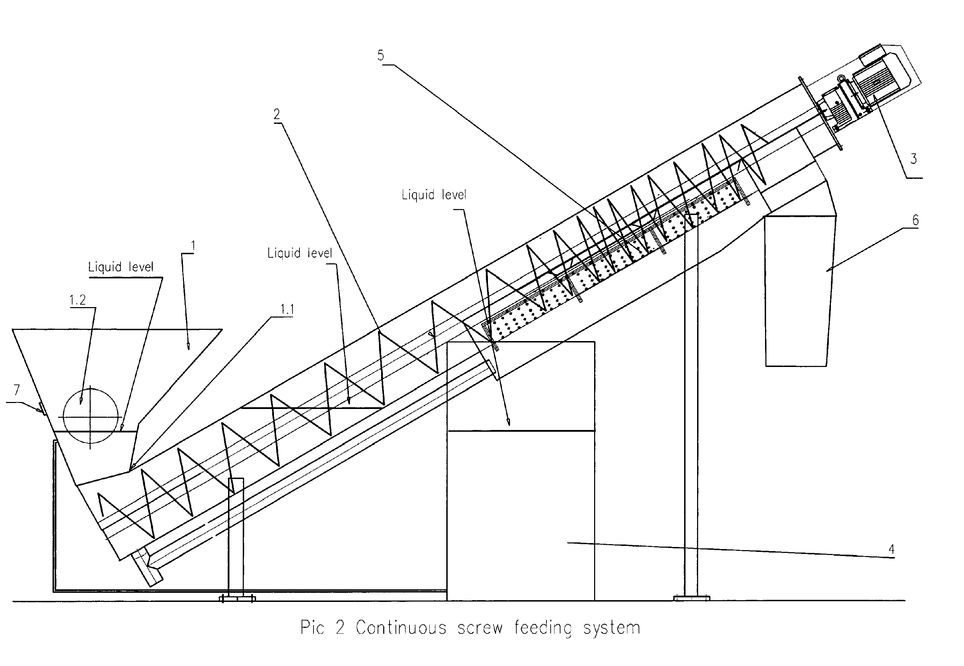

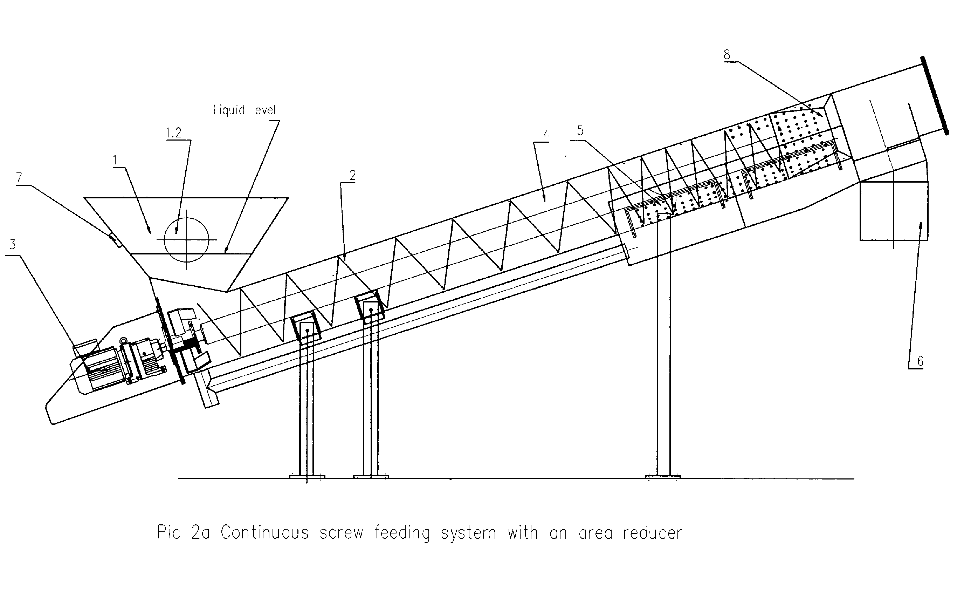

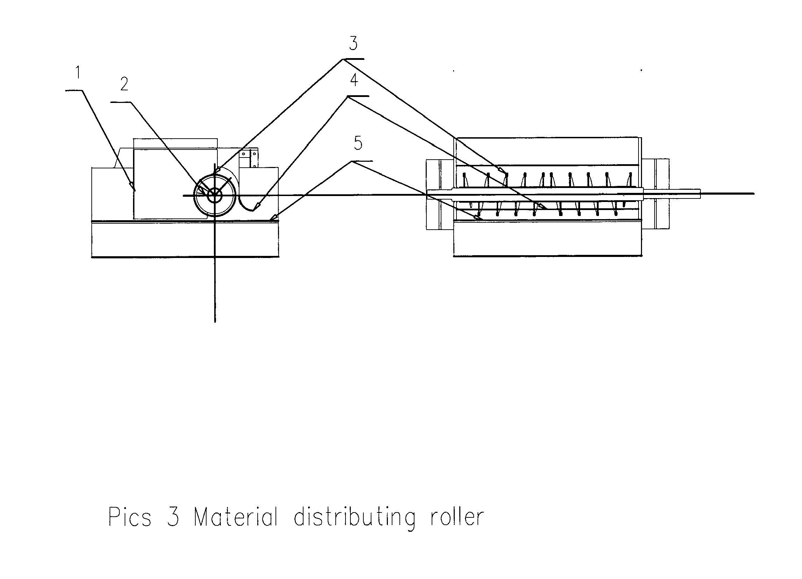

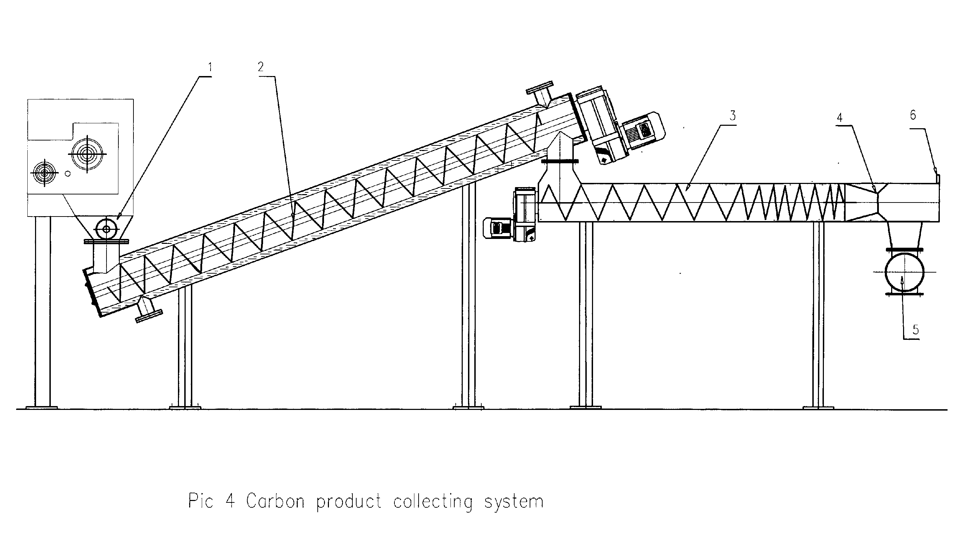

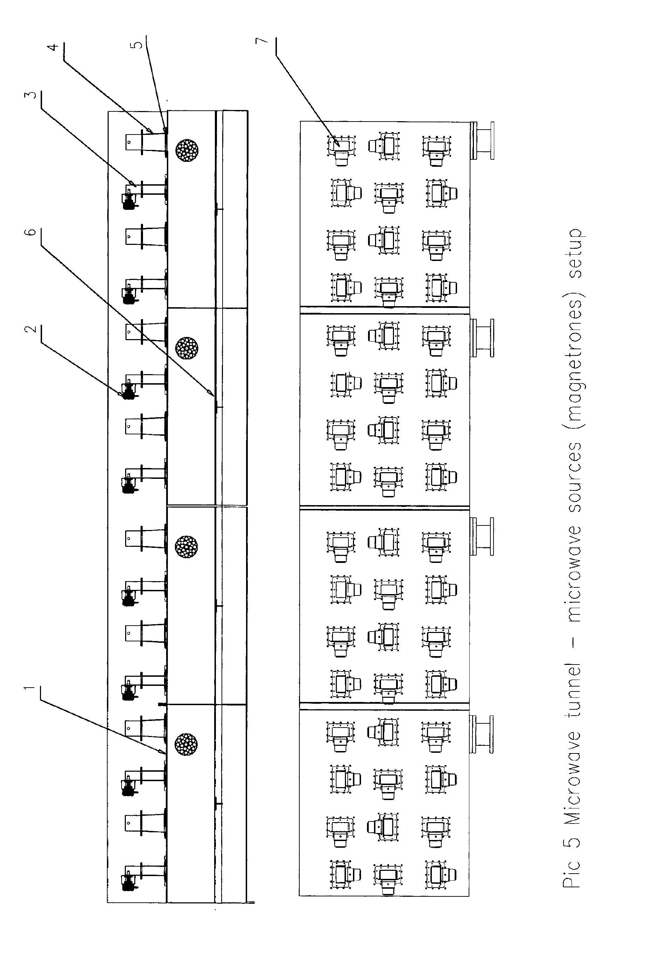

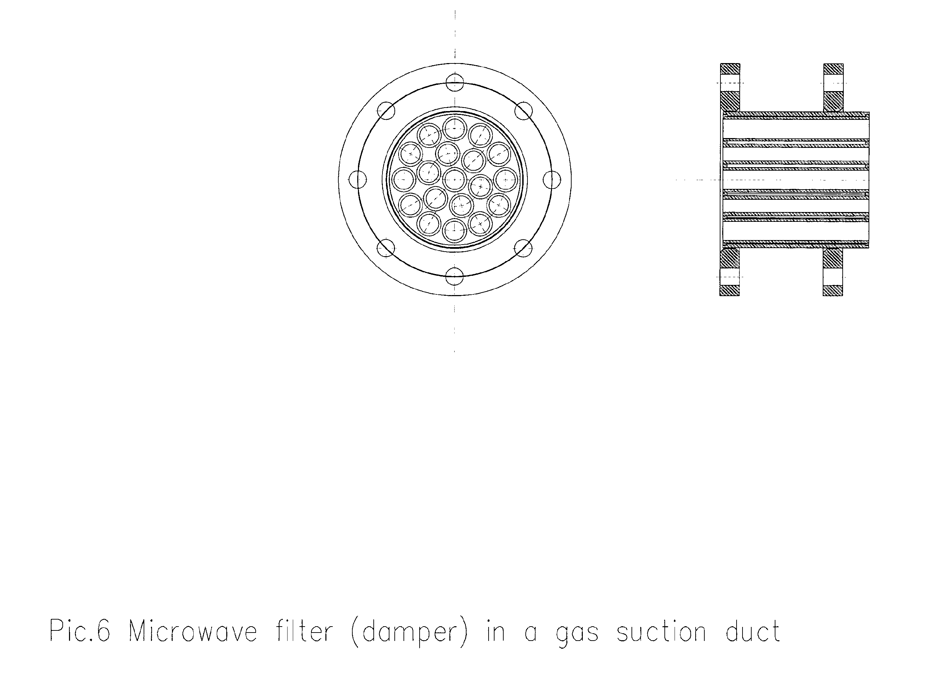

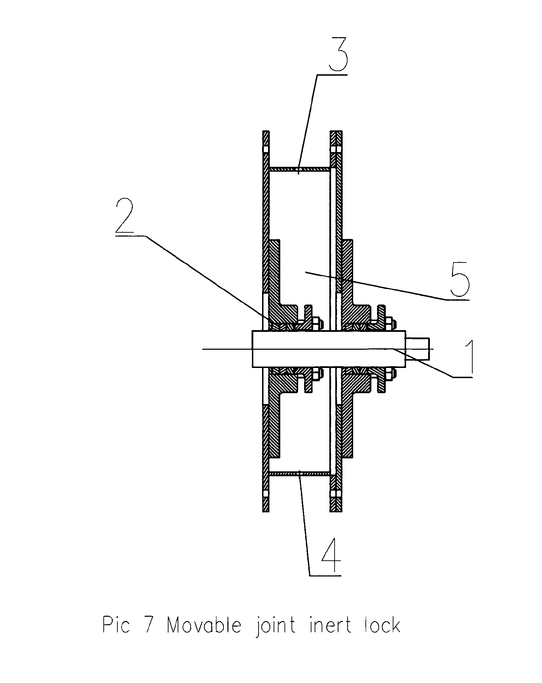

## Claims

1. Method for recycling of organic waste, preferably used tyres, by a depolymerisation method in a microwave apparatus, in a hydrocarbon and air-free atmosphere, in a light negative pressure, lower from the ambient pressure by 0.03-0.07 [at].

2. Method for recycling of organic waste, as per claim no. 1, **characterised in that** the depolymerisation process is conducted on a pre-shredded waste material evenly distributed, with a variable thickness of the layer, on a mesh belt conveyor matched to the type of microwave sources.

3. Method for recycling of organic waste, as per claim no. 1, **characterised in that** the depolymerisation process is conducted on a waste material purged from air and mineral residue and damped in an oil, water, or other appropriately chosen liquid bath.

4. Method for recycling of organic waste, as per claim no. 1, **characterised in that** the temperature of the depolymerisation process can be controllable as well as the end product yield ratio and purity level, through the variable thickness of the waste material layer, changes to the passage speed of the waste material through the microwave tunnel, changes to the power level and/or frequency of the electromagnetic field.

5. Method for recycling of organic waste, as per claim no. 1, **characterised in that** the depolymerisation process is conducted in a microwave tunnel where the power adjustment of electromagnetic field and its even influence on the waste material is delivered by an appropriate location of multiple polarised microwave sources of frequency of 2.45 [GHz] or 5.8 [GHz] whose part can switched off or replaced with sources of a higher/lower unit power.

6. Method for recycling of organic waste, as per claim no. 1, **characterised in that** the waste material fed into the microwave tunnel can be pre-shredded only coarsely, just to allow distributing it freely on a mesh belt conveyor in an appropriately thin layer.

7. Apparatus for recycling of organic waste, preferably used tyres using microwave technique, **characterised in that** it consists of single completely sealed chamber inside of which there is a microwave tunnel, as well as a mesh belt conveyor transporting the evenly distributed pre-shredded waste material in a continuous manner, with an adjustable speed, through the full length of the tunnel, from a distributing roller to a carbon product outlet hopper.

8. Apparatus for recycling of organic waste, as per claim no. 7, **characterised in that** it is equipped with a continuous screw feeder feeding the pre-shredded waste material through the hydraulic setup, purifying the material and preventing the air from getting into the microwave tunnel.

9. Apparatus for recycling of organic waste, as per claim no. 7, **characterised in that** the pre-shredded waste material is fed through a hydraulic lock or extruded through an area reducer to prevent the air from getting into the microwave tunnel.

10. Apparatus for recycling of organic waste, as per claim no. 7, **characterised in that** its feeding system is equipped with a setup for pushing the residual oil, water or other liquid from the waste material being fed.

11. Apparatus for recycling of organic waste, as per claim no. 7, **characterised in that** its feeding system is equipped with a distributing roller with a bi-directional screw, which distributes the waste material evenly on the mesh belt conveyor.

12. Apparatus for recycling of organic waste, as per claim no. 7, **characterised in that** the electromagnetic field in the microwave tunnel is generated by a setup of multiple linearly polarised microwave sources of frequency of 2.45 [GHz] or 5.8 [GHz], distributed at distance appropriate for a given wavelength, where each consecutive source is rotated by 90° horizontally and slightly dephased.

13. Apparatus for recycling of organic waste, as per claim no. 7, **characterised in that** its solid product outlet is equipped with a screw conveyor setup to collect and grind the product, with first the product being cooled down to the ambient temperature and then extruded through an area reducer to prevent the air from getting into the microwave tunnel.

14. Apparatus for recycling of organic waste, as per claim no. 7, **characterised in that** it is equipped with a fan system for sucking off the process gases and providing a light negative pressure in the microwave tunnel at the level of 0.03-0.07 [at].

15. Apparatus for recycling of organic waste, as per claim no. 7, **characterised in that** all the joints of movable parts with sealed chamber's walls are protected by special locks filled with an inert gas in order to make these joints air-tight.

16. Apparatus for recycling of organic waste, as per claim no. 7, **characterised in that** suction ducts for the process gases are equipped with special microwave filters (dampers) in the shape of pipes filling the duct at given spot, with the pipes being less or equal to 20 [mm] in diameter and more than 100 [mm] in length for microwaves of frequency of 2.45 [GHz], or respectively smaller for microwaves of frequency of 5.8 [GHz].
